(19) Europäisches Patentamt
European Patent Office
Office européen des brevets

(11) **EP 1 571 318 B1**

(12) **FASCICULE DE BREVET EUROPEEN**

(45) Date de publication et mention
de la délivrance du brevet:
**28.09.2011 Bulletin 2011/39**

(51) Int Cl.:
***F02D 41/14*** *(2006.01)*

(21) Numéro de dépôt: **05290416.6**

(22) Date de dépôt: **23.02.2005**

(54) **Methode d'estimation de la richesse en carburant dans un cylindre d'un moteur a combustion**

Verfahren zur Abschätziung des Luft/Kraftstoffverhältnisses in einem Zylinder einer Brennraftmaschine

Method for estimating richness of air-fuel mixture in a cylinder of a combustion engine

(84) Etats contractants désignés:
**AT DE ES GB IT SE**

(30) Priorité: **05.03.2004 FR 0402323**

(43) Date de publication de la demande:
**07.09.2005 Bulletin 2005/36**

(73) Titulaire: **Institut Français du Pétrole**
**92852 Rueil Malmaison Cedex (FR)**

(72) Inventeurs:
• **Moulin, Philippe**
**75009 Paris (FR)**
• **Corde, Gilles**
**92270 Bois-Colombes (FR)**
• **Castagne, Michel**
**92000 Nanterre (FR)**
• **Rousseau, Grégory**
**92110 Clichy (FR)**

(56) Documents cités:
**EP-A- 0 553 570      WO-A-99/36690**
**DE-A- 2 834 314      DE-A- 19 834 548**
**FR-A- 2 833 648**

EP 1 571 318 B1

**Description**

La présente invention concerne une méthode d'estimation de la richesse en carburant pour chaque cylindre d'un moteur à combustion interne, en particulier à injection.

La connaissance de la richesse, caractérisée par le rapport de la masse de carburant sur la masse d'air, est importante pour tous les véhicules, qu'ils soient à motorisation essence ou à motorisation Diesel. Dans le cas d'un moteur essence, la richesse conditionne la nature des émissions polluantes, un mélange légèrement riche créant un accroissement des émissions de CO et HC, tandis qu'un mélange légèrement pauvre augmentera les émissions de NOx. On voit tout l'intérêt d'un pilotage précis de la richesse cylindre à cylindre sur ce type de moteur fonctionnant avec une richesse globale (moyenne des 4 cylindres) autour de la stoechiométrie afin de limiter les émissions à la source. Dans le cas des moteurs Diesel classiques ou des moteurs à essence fonctionnant en combustion stratifiée, la combustion s'effectue généralement en mélange pauvre (richesse inférieure à 1) et s'avère moins sensible à une réglage précis de la richesse. La dépollution par catalyse déNOx de ce type de moteur requiert cependant le maintien provisoire pendant quelques secondes d'un mélange légèrement riche afin de purger le piège à NOx , pour revenir ensuite en fonctionnement normal à un mélange pauvre. La dépollution par catalyse déNOx nécessite donc un pilotage précis de la richesse cylindre par cylindre, afin de garantir le niveau de richesse requis pendant cette phase. Enfin les moteurs fonctionnant suivant les nouveaux types de combustion, en particulier les moteurs Diesel HCCI, dans le périmètre desquels peut être classé le concept NADI™ développé par l'IFP, fonctionnent avec des taux de gaz brûlés recyclés, et donc des richesses enfermées, très importants qui les rendent également très sensibles à un réglage précis de la richesse de chaque cylindre.

Afin de contrôler d'une manière plus précise, et surtout individuelle, l'injection des masses de carburant dans les cylindres, une reconstruction de la richesse dans chaque cylindre est nécessaire. L'implantation de sondes de richesse en sortie de chaque cylindre n'étant pas envisageable sur véhicule étant donné leur prix de revient, la mise en place d'un estimateur fonctionnant à partir des mesures d'une seule sonde proportionnelle placée dans le commun de l'échappement, permet avantageusement de connaître séparément les richesses de chaque cylindre. Un contrôle moteur pourra ainsi, à partir des richesses reconstruites, adapter les masses de carburant injectées dans chacun des cylindres afin que les richesses soient équilibrées dans tous les cylindres.

Dans la suite de la description, l'invention sera illustrée par l'exemple d'un moteur Diesel turbocompressé équipé d'un piège à NOx, où la sonde pourra être placée en sortie de la turbine et en amont du piège à NOx. La mesure donnée par cette sonde est utilisée pour un contrôle global des masses injectées dans les cylindres lors des phase riches, chaque cylindre recevant alors la même masse de carburant. La présente invention s'applique cependant à tous types de moteur possédant une (ou plusieurs) sonde(s) de richesse proportionnelle(s) en aval de la jonction de plusieurs cylindres.

On connaît le document FR-2834314 qui décrit un modèle réalisé, puis observé et filtré grâce au filtre de Kalman. Ce modèle ne contient aucune description physique du mélange dans le collecteur, et ne tient pas compte des phénomènes très pulsatoires des débits.

L'estimation de la richesse est uniquement conditionnée par les coefficients d'une matrice, coefficients qui doivent être identifiés hors ligne grâce à un algorithme d'optimisation. De plus, à chaque point de fonctionnement (régime/ charge) correspond un réglage différent de la matrice, donc une identification de ses paramètres. Cet estimateur nécessite donc de mettre en place de lourds moyens d'essais (avec 5 sondes de richesse) d'acquisition, et n'a aucune robustesse dans le cas d'un changement de moteur.

La présente invention a pour objet de modéliser plus finement le processus d'échappement afin, d'une part de se passer de l'étape d'identification, et d'autre part d'apporter plus de robustesse au modèle d'estimation de richesse, et ceci pour tous les points de fonctionnement du moteur.

La mise au point d'un formalisme différent (pas de permutation circulaire du vecteur d'état) permettra en outre d'effectuer une mesure tous les 6° de rotation du vilebrequin, donc de s'affranchir davantage du bruit.

Ainsi, la présente invention concerne une méthode pour estimer la richesse en carburant dans chacun des cylindres d'un moteur à combustion multi-cylindrcs comprenant un circuit d'échappement comprenant au moins des tubulures reliant l'échappement des cylindres à un collecteur et un capteur de mesure de la richesse en aval dudit collecteur. La méthode comporte les étapes suivantes:

- on établit un modèle physique (RTM) représentant en temps réel l'éjection des gaz des cylindres et leur parcours dans ledit circuit d'échappement jusqu'au capteur,
- on couple ledit modèle avec un observateur d'état non linéaire du type Filtre de Kalman Etendu dans lequel on prend en compte la mesure de richesse fournie par le capteur,
- on déduit la valeur de richesse à l'entrée du circuit d'échappement,
- on traite cette valeur de richesse par un autre filtre de Kalman pour identifier la richesse de chacun des cylindres.

Selon l'invention, on peut affecter à un cylindre déterminé, la valeur de richesse à l'entrée du circuit d'échappement.

On peut évaluer un temps de retard dû au temps de transit des gaz et au temps de réponse du capteur, en effectuant une perturbation test dans un cylindre déterminé et en mesurant son effet au capteur.

On peut valider le modèle physique (RTM) à l'aide d'une modélisation de référence non inversable.

L'invention peut être appliquée à un contrôle moteur pour adapter les masses de carburant injectées dans chacun des cylindres afin de régler les richesses dans les cylindres.

La présente invention sera mieux comprise et ses avantages apparaîtront plus clairement à la lecture de la description suivante d'un mode de réalisation, nullement limitatif, illustré par les figures ci-après annexées, parmi lesquelles:

- la figure 1 illustre schématiquement le modèle physique représentant le processus d'échappement;
- la figure 2 montre la comparaison entre un modèle de référence et le modèle physique selon l'invention,
- la figure 3 montre la structure schématique du modèle temps réel,
- la figure 4 illustre les résultats du modèle d'éjection des gaz RTM1 par rapport à une référence,
- la figure 5 montre la comparaison entre le modèle de référence AMESim et le modèle selon l'invention,
- la figure 6 montre la structure de l'estimateur,
- les figures 7a, 7b, 7c montrent les résultats de l'estimateur avec le module d'allocation,
- les figures 8 et 9 montrent la structure de l'estimateur comprenant la prise en compte du retard,
- les figures 10a, 10b montrent l'identification du temps de retard,
- les figures 11a, 11b, 12a, 12b illustrent les résultats de l'estimateur selon l'invention pour deux points de fonctionnement.

Les intérêts d'une estimation de la richesse dans chacun des cylindres individuellement sont nombreux par rapport à une estimation de la richesse moyenne de l'ensemble des cylindres :

- gain sur le prix de revient si l'estimation est effectuée à partir d'une seule sonde de richesse en sortie turbine,
- réduction des émissions polluantes par réglage plus fin de la richesse sur chaque cylindre,
- amélioration de l'agrément de conduite (régularisation du couple délivré),
- réduction de la consommation de carburant par harmonisation des cylindres,
- diagnostic du système d'injection (détection et compensation de la dérive d'un injecteur ou de la défaillance du système d'injection).
- correction des disparités de remplissage en air et/ou en gaz brûlés

Description du processus d'échappement:

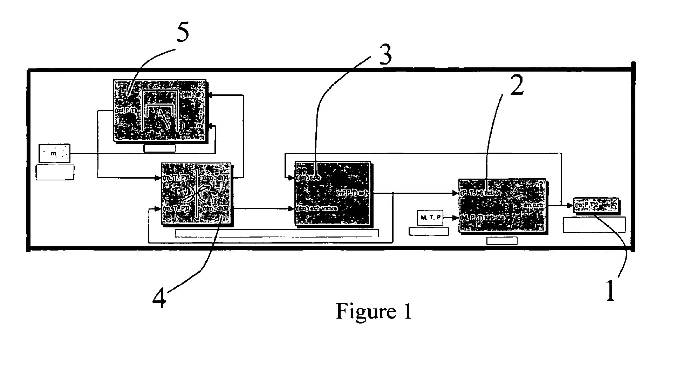

Le processus d'échappement comprend le parcours des gaz entre la soupape d'échappement jusqu'à l'air libre, en sortie du pot d'échappement. Le moteur de la présente mise en oeuvre en exemple est un 4 cylindres de 2000 cm3. Il est équipé d'un turbocompresseur, dont l'action peut-être contrôlée par la commande d'une vanne de décharge de type "wastegate". Un circuit d'EGR (recirculation des gaz d'échappement) est aussi présent sur ce moteur, la vanne se situant en amont de la turbine. Le schéma de la figure 1 présente les éléments descriptifs du processus d'échappement.

La sonde de richesse 1 est située juste après la turbine 2. Les gaz, après la combustion dans le cylindre 3, subissent les actions suivantes :

- passage à travers la soupape d'échappement 4. Cette dernière étant commandée par un arbre à came, la loi de levée est en forme de cloche. Les débits passeront d'une valeur élevée, lors de l'ouverture de la soupape, à une valeur plus faible lorsque les pressions cylindre et collecteur s'égaliseront, pour enfin ré-augmenter lorsque le piston commencera à remonter pour éjecter les gaz d'échappement.
- passage dans une courte tubulure reliant le collecteur à la sortie de la culasse.
- phase de mélange dans le collecteur d'échappement 5 où les débits des quatre cylindres se rejoignent. C'est ici que se produit le mélange des bouffées, fonction du type de collecteur (symétrique ou asymétrique), de l'AOE (Avance Ouverture Echappement) et du RFE (Retard Fermeture Echappement) : qui détermineront la proportion de recouvrements des débits.
- passage à travers la turbine qui fournit le couple nécessaire au compresseur, situé en amont de l'admission. Bien que son action sur les débits soit peu connue, on peut penser qu'elle va mélanger un peu plus encore les bouffées provenant des différents cylindres.
- mesure par la sonde de type UEGO.

La composition des gaz d'échappement dépend des quantités de carburant et d'air introduites dans la chambre de combustion, de la composition du carburant et du développement de la combustion.

En pratique, la sonde de richesse mesure la concentration en 02 à l'intérieur d'une chambre de diffusion, mise en relation avec la conduite d'échappement par une barrière de diffusion fabriquée en matériaux poreux. Cette configuration pourra induire des différences suivant l'emplacement de la sonde choisit, notamment à cause des variations de températures et/ou de pressions à proximité de la sonde de richesse.

Ce phénomène de variation de richesse dépendant de la pression ou de la température a cependant été négligé, puisque l'on s'intéresse à détecter des disparités de richesse entre les cylindres, la valeur moyenne étant normalement conservée par l'estimateur.

Dans le modèle de l'estimateur selon l'invention, on a choisi de relier la richesse mesurée à la masse d'air (ou au débit d'air) se trouvant autour de la sonde, par rapport à la masse totale (ou au débit total). Le modèle est basé sur une approche trois gaz : air, carburant et gaz brûlés. Ainsi, on considère, qu'à mélange pauvre, la totalisé du gaz restant après combustion est un mélange d'air et de gaz brûlés. Pour un mélange riche, le carburant étant en excès, on retrouve donc du carburant imbrûlé et des gaz brûlés après combustion, tandis que tout l'air a disparu. En réalité, la combustion n'est jamais à 100% complète, mais pour notre estimateur, la combustion sera considérée comme complète.

Afin de définir une formulation reliant la richesse aux trois espèces cités, on considère les masses des trois gaz suivants, ainsi que leur pourcentage en masse, avant et après combustion :

- air : x
- carburant : y
- gaz brûlés : z

Dans le cas d'un mélange pauvre : l'air est en excès, et il ne reste pas de carburant après la combustion. Avant combustion, on suppose que sont présentes les masses suivantes dans le cylindre :

$m_{air} = x \; ; \; m_{carb} = y \; ; \; m_{GazB} = 0$

Sachant qu'il faut 14,7 fois plus d'air que de carburant pour être à la stoechiométrie avec le carburant employé, on peut construire ce tableau indiquant les masses de chaque espèce avant et après combustion :

|  | Masse d'air | Masse de carburant | Masse de gaz brûlés |
|---|---|---|---|
| Avant combustion | x | y | 0 |
| Après combustion | x-14,7×y | 0 | y+14,7×y |

La richesse λ représentant le rapport (masse de carburant)/(masse d'air), on obtient après calculs la formulation suivante, uniquement valable si le mélange est pauvre :

$$\lambda = \frac{m_{gazB}.PCO}{m_{air}.(1 + PCO) + m_{gazB}.PCO}$$

Pour un mélange riche, la formule est la suivante :

$$\lambda = \frac{m_{carb}(1 + PCO)}{m_{gazB}} + 1$$

PCO correspond au rapport de la masse d'air sur la masse de carburant lorsque le mélange est stoechiométrique.

Cependant, ces formules sont valables dans le cas où le mélange ne contient pas d'EGR, puisque la présence de gaz brûlés à l'admission modifiera les concentrations des trois gaz à l'échappement.

Dans le présent mode de réalisation, seule la formule de richesse pour mélange pauvre est utilisée dans l'estimateur. Cependant, l'invention ne se limite pas à ce mode, en effet, la formule est continue au voisinage de la richesse 1, et son inversion ne pose pas de problème pour les mélanges riches.

Afin de mieux appréhender la manière dont se mélangent les gaz dans les conduites d'échappement, un modèle de moteur diesel a été utilisé sous le logiciel AMESim de la Société IMAGINE (France) dont la bibliothèque Engine est développée en collaboration avec l'IFP. Ce modèle, qui ne peut pas être inversé servira de référence pour valider le modèle selon l'invention.

AMESim est un logiciel de modélisation 0D, particulièrement bien adapté aux phénomènes thermiques et hydrauliques. Il permet notamment de modéliser des volumes, conduites ou restriction.

Le modèle d'échappement comprend:

- les tubulures d'échappement représentées par un volume et un tube;
- le collecteur d'échappement avec échanges thermiques;
- la turbine et la vanne de by-pass;
- un volume à la confluence des débits turbine et vanne;
- un tube entre la turbine et la sonde de mesure;
- un volume et un tube pour la ligne d'échappement.

Les blocs élémentaires de modélisation des tubulures, restrictions et volumes sont décrits dans le manuel d'utilisation AMESim "Thermal Pneumatic Library". On utilise les équations standard: pour calculer un débit à travers une restriction, la conservation d'énergie et de la masse. De plus, le modèle prend en compte les inerties des gaz, ce qui est important pour étudier la dynamique de la composition des gaz.

Comme ce modèle est 0D, la dimension x n'est pas pris en compte, et il n'est pas possible de modéliser un temps de retard avec une approche physique. Si une variable d'entrée est modifiée, la sortie est immédiatement changée. Le temps de transport est ainsi négligé. Cette limitation est importante lorsque l'on essaye de travailler sur des acquisitions en temps réel.

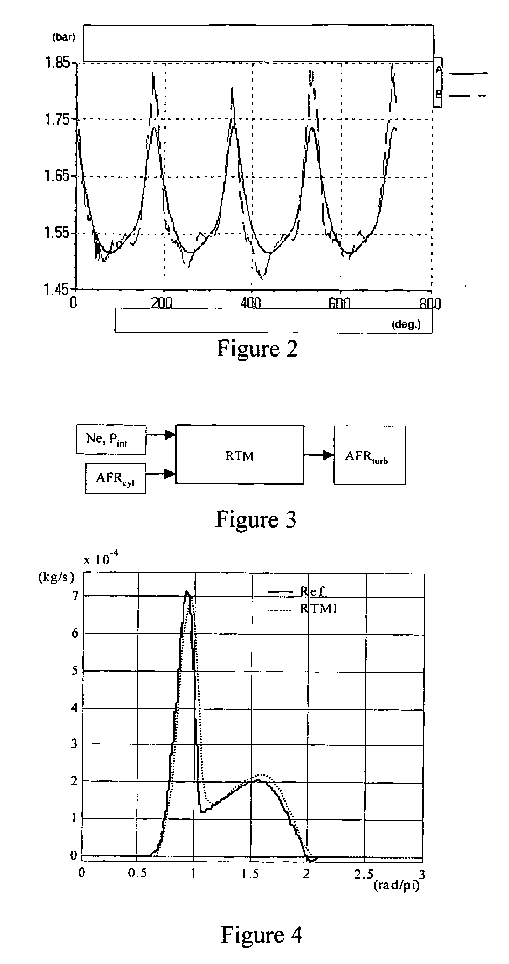

Le modèle de référence développé a été validé par comparaison avec des mesures sur banc d'essais. La figure 2 (en ordonnée: pression au collecteur en bar, en abscisse: angle vilebrequin en degré) montre la comparaison entre la courbe B représentant les mesures sur banc avec le résultat donné par le modèle AMESim, courbe A. On constate que les phénomènes dynamiques principaux sont très bien représentés.

Dans le but d'obtenir un estimateur, le modèle obtenu doit être suffisamment simple pour pouvoir être inversé. Aussi, seuls les phénomènes physiques important issus de la dynamique de la composition des gaz ont été représentés. D'autre part, l'estimateur étant destiné à être implémenté dans un système de contrôle moteur embarqué, les variables d'entrées sont limitées à celle classiquement disponibles, c'est à dire: régime moteur, pression à l'admission, temps d'injection, mesure de sonde $\lambda$.

### Modèle temps réel

Le modèle en temps réel RTM a donc la structure illustrée sur la figure 3, où $AFR_{turb}$ est la composition des gaz en sortie de la turbine, $AFR_{cyl}$ est la richesse dans chacun des cylindres, $N_e$ le régime moteur, $P_{int}$ la pression à l'admission.

Dans le présent mode de réalisation, on considère que la variation de la température est faible sur un cycle moteur, et que son action est limitée sur les variations de débits. Ce sont en effet les variations de pressions qui sont primordiales dans le processus, puisque directement reliées aux débits. On s'impose donc une température fixe pour chaque élément : cylindres, collecteur et turbine. Les échanges de chaleur ne sont donc pas non plus modélisés. Cette hypothèse de simplification se révèle sans grande incidence.

Dans une première approche, deux gaz sont considérés: de l'air frais et des gaz brûlés. Les équations classiques décrivent l'évolution de la masse totale des gaz dans les volumes, et de la masse de l'air frais. Les gaz brûlés peuvent ensuite en être déduit. Cette démarche est valable dans le cas d'un fonctionnement en mélange pauvre, mais des équations similaires peuvent être écrites pour le carburant et les gaz brûlés, dans le cas de mélange riche.

Ejection des gaz:

Pour ce modèle, le volume correspond à celui d'un cylindre, ce dernier étant continuellement en mouvement de translation. Ainsi, le volume dépendra de l'angle vilebrequin.

Un modèle de restriction utilise les équations de Barré Saint Venant pour modéliser la restriction aux soupapes d'échappement.

Pour des raisons d'optimisation liées au temps de calcul, le modèle d'éjection des gaz, composé du cylindre et de la restriction variable aux soupapes d'échappement, a été remplacé par un réseau de neurones.

Ce dernier permet en effet à l'estimateur de calculer les richesses bien plus rapidement, étant donné la faible complexité du réseau de neurones.

Ce réseau est composé de 2 couches cachées, et de 12 neurones par couches. Il possède 3 neurones dans la couche d'entrée (régime, masse dans le cylindre, et angle vilebrequin) et fournit en sortie une allure du débit en sortie des soupapes d'échappement.

La figure 4 illustre les résultats de ce modèle RTM1 par rapport à une référence Ref.

$$W_{cyl} = f_{NN}(N_e, P_{int}, \alpha_{crank}) \qquad (1)$$

$W_{cyl}$ : Débit massique du gaz total en sortie cylindre

$N_e$ : Régime moteur

$P_{int}$ : Pression d'entrée collecteur

$\alpha_{crank}$ : Angle de calage du vilebrequin

La composition du gaz est la même que dans les cylindres. On a donc:

$$W_{cyl\_air} = W_{cyl} \times (1 - AFR_{cyl}) \qquad (2)$$

$W_{cyl\_air}$: Débit massique d'air frais en sortie cylindre

Collecteur d'échappement:

Le collecteur d'échappement est modélisé selon un volume dans lequel il y a conservation de la masse. On suppose que la température est sensiblement constante, et déterminée à partir d'abaque fonction de la charge et du régime moteur.

$$\begin{cases} \dot{M}_{man} = W_{cyl} - W_{turb} \\ \dot{M}_{man\_air} = W_{cyl\_air} - W_{turb\_air} \\ P_{man} = M_{man} \times \dfrac{R \times T_{man}}{V_{man}} \end{cases} \qquad (3)$$

$M_{man}$ : Masse de gaz en sortie collecteur

$M_{man\_air}$ : Masse d'air frais en sortie collecteur

$W_{turb}$ : Débit massique à travers la turbine

$W_{turb\_air}$ : Débit massique d'air frais à travers la turbine

$P_{man}$ : Pression de sortie collecteur

$T_{man}$ : Température de sortie collecteur

$V_{man}$ : Volume de sortie collecteur

$R$ : Constante thermodynamique des gaz parfaits

Modèle de la turbine:

La turbine est modélisée selon une restriction du débit. Le débit dans la turbine est généralement donné par abaque, il est estimé par un polynôme du troisième ordre et corrigé pour tenir compte de la pression d'entrée et de la température. Les coefficients du polynôme sont optimisés par corrélation avec la cartographie de la turbine.

$$W_{turb} = Poly_{turb}(\frac{P_{man}}{P_{exh}}) \times \frac{P_{man}}{\sqrt{T_{man}}} \times \frac{\sqrt{T_{ref}}}{P_{ref}} \qquad (4)$$

$P_{exh}$ :          Pression de sortie échappement

$T_{ref}, P_{ref}$ :     Température et pression de référence turbine

La composition du débit dans la turbine est la même qu'à la sortie du collecteur, donc:

$$W_{turb\_air} = W_{turb} \times \frac{M_{man\_air}}{M_{man}} \qquad (5)$$

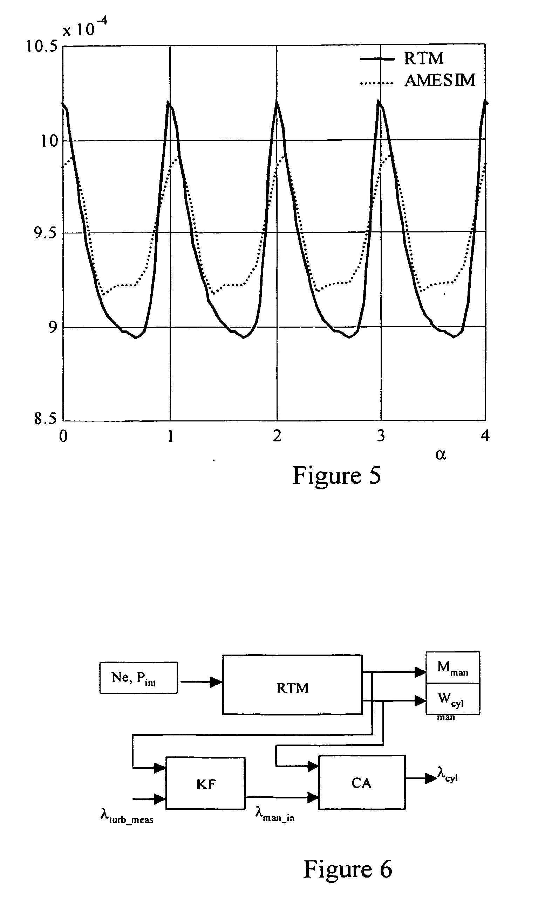

La figure 5 montre la comparaison entre le modèle AMESim cité plus haut et le modèle selon l'invention réalisé sous Simulink. On note que la dynamique est bien représentée et que les signaux sont bien en phase.

Sonde de mesure:

La fonction de transfert de la sonde de mesure de type sonde "UEGO" est modélisée selon un filtre du premier ordre, et la richesse (AFR) donné par le modèle en aval de la turbine est égale à la richesse dans la collecteur. Donc:

$$\dot{\lambda}_{meas} = \frac{1}{\tau}(1 - \frac{M_{man\_air}}{M_{man}} - \lambda_{meas}) \qquad (6)$$

$\lambda_{meas}$   : Richesse relative mesurée en aval de la turbine
$\lambda_{cyli}$ :     Richesse relative dans le cylindre i
$\tau$ :        Constante de temps du filtre (environ 20 ms).

Temps de retard de l'échappement:

Les temps de retard dus au transport du gaz dans les tubulures et les différents volumes, ainsi que du temps « mort » de la sonde de mesure, n'est pas pris en compte dans le modèle physique décrit ci-dessus. Cependant le modèle a été construit de manière linéaire vis-à-vis de ce ces retards. Aussi, les retards peuvent être compilés en un seul délai de retard pour l'ensemble du processus d'échappement, et le modèle peut être inversé tel quel, l'influence du délai de retard pouvant être considéré ultérieurement, comme explicité ci-après.

**Estimateur de richesse AFR :**

Le modèle décrit ci-dessus que la richesse en aval de la turbine est exprimée comme une fonction de la composition du débit de gaz à l'entrée du collecteur d'échappement. Une fois inversé, ce modèle permet donc de connaître la richesse (AFR) à l'entrée du collecteur. Après avoir pris en compte les effets dynamiques de l'échappement, on obtient la richesse en sortie des cylindres.
L'estimateur de la richesse individuelle par cylindre, selon l'invention, comprend principalement deux étapes :

- une première étape d'inversion du modèle d'échappement qui conduit à l'obtention d'une estimation de la richesse à l'entrée du collecteur d'échappement,
- et une seconde étape qui identifie le bon cylindre auquel l'estimation de la richesse doit être allouée.

<u>Structure de l'estimateur :</u>

Dans les équations précédentes, la richesse mesurée auprès du capteur est calculée à partir de la richesse dans les cylindres, du débit d'air en sortie cylindres et du débit du gaz total. Cette structure est difficilement utilisée dans un filtre de Kalman, car il faut estimer les entrées du modèle. Le système d'état est donc complété par l'adjonction des entrées (Mohinder S. Grewal : « Kalman Filtering Theory and Practice » Prentice Hall 1993).
A partir des équations (2) à (6), l'équation d'état devient :

$$X = \begin{bmatrix} M_{man\_air} \\ M_{man} \\ W_{cyl\_air} \\ W_{cyl} \\ \lambda_{meas} \end{bmatrix} \qquad \dot{X} = \begin{cases} W_{cyl\_air} - f_{turb}(M_{man}) \times M_{man\_air} \\ W_{cyl} - f_{turb}(M_{man}) \times M_{man} \\ 0 \\ 0 \\ \dfrac{1}{\tau} \times \left( \dfrac{M_{man}}{M_{man} - M_{man\_air}} - \lambda_{meas} \right) \end{cases} \qquad (7)$$

avec :

$$f_{turb}(M_{man}) = Poly_{turb}\left( \frac{M_{man} \times R \times T_{man}}{V_{man} \times \sqrt{T_{man}} \times P_{exh}} \right) \times \frac{R \times T_{man}}{V_{man} \times \sqrt{T_{man}}} \times \frac{\sqrt{T_{ref}}}{P_{ref}} \qquad (8)$$

Les équations des mesures d'entrées sont :

$$Y = \begin{bmatrix} \lambda_{meas} \\ M_{man} \end{bmatrix} \qquad (9)$$

Ce modèle est non linéaire, mais il a une structure qui peut être utilisée dans un filtre de Kalman étendu (Greg Welch and Gary Bishop : « An Introduction to the Kalman Filter ». University of North Carolina - Chapel Hill TR95-041. May 23, 2003). On rappelle ci-après la structure d'un filtre de Kalman étendu.
Le filtre de Kalman étendu, aussi appelé EKF (Extented Kalman Filter) permet d'estimer le vecteur d'état d'un processus dans le cas où celui-ci, ou le procédé de mesure, est non linéaire.
On suppose que le processus est gouverné par une équation stochastique non linéaire :

$$x_k = f(x_{k-1}, u_k, w_{k-1})$$

La mesure est donnée par l'équation d'observation non linéaire :

$$y_k = h(x_k, v_k)$$

où les variables aléatoires $w_k$ et $v_k$ représentent respectivement les bruits de modèle et les bruits de mesure.
L'algorithme de prédiction / correction est le suivant :

Etape n° 1 : Prédiction

$$\hat{x}^- = f(\hat{x}_{k-1}, u_k, 0)$$
$$P_k^- = A_k P_{k-1} A_k^T + W_k Q_{k-1} W_k^T$$

Etape n°2 : Correction

$$K_k = P_k^- H_k^T (H_k P_k^- H_k^T + V_k R_k V_k^T)^{-1}$$
$$\hat{x}_k = \hat{x}_k^- + K_k(z_k - h(\hat{x}_k^-, 0))$$
$$P_k = (I - K_k H_k) P_k^-$$

où :

- A est la matrice Jacobienne des dérivées partielles de f par rapport à x :

$$A_{[i,j]} = \frac{\partial f_{[i]}}{\partial x_{[j]}}(\hat{x}_k, u_k, 0)$$

- W est la matrice Jacobienne des dérivées partielles de f par rapport à w :

$$W_{[i,j]} = \frac{\partial f_{[i]}}{\partial w_{[j]}}(\hat{x}_k, u_k, 0)$$

- H est la matrice Jacobienne des dérivées partielles de h par rapport à x :

$$H_{[i,j]} = \frac{\partial h_{[i]}}{\partial x_{[j]}}(\hat{x}_k^-, 0)$$

- V est la matrice Jacobienne des dérivées partielles de h par rapport à v :

$$V_{[i,j]} = \frac{\partial h_{[i]}}{\partial x_{[j]}}(\hat{x}_k^-, 0)$$

On notera que pour alléger les notations, l'indice du pas de temps k n'a pas été indiqué, même si ces matrices sont en fait différentes à chaque pas.

A l'entrée du filtre de Kalman, la richesse AFR en aval de la turbine et la masse totale de gaz dans le collecteur, sont nécessaires. La richesse est mesurée, la masse totale de gaz est le résultat du calcul du modèle en parallèle au filtre de Kalman.

La sortie du filtre de Kalman est l'estimation d'état, d'où la composition du gaz d'échappement à l'entrée du collecteur est obtenue. Ce résultat doit être ensuite affecté au bon cylindre.

Allocation par cylindre :

Il a été décrit plus haut le réseau de neurone utilisé pour modéliser le débit massique de gaz en sortie des cylindres. Si la dynamique des gaz dans les tubulures, et le délai de retard correspondant, sont négligés, la contribution de chaque cylindre au débit massique des gaz d'échappement à l'entrée du collecteur peut être déterminée par le moyen du rapport entre le débit massique d'un cylindre et le débit massique total. C'est exprimé par la matrice C :

$$C = \left[ W_{cyl1}, W_{cyl2}, W_{cyl3}, W_{cyl4} \right] / W_{cyl} \qquad (10)$$

Cette matrice dépend de l'angle au vilebrequin, et est périodique. Le temps d'échantillonnage de l'algorithme est de six degrés d'angle de vilebrequin. Cette fréquence est importante pour avoir des points de calcul du modèle pour lesquels une seule valve d'échappement est ouverte. A cette fréquence, c'est le cas quelque soit le régime moteur.

On considère ensuite que la composition du gaz d'échappement à l'entrée du collecteur ne dépend que des cylindres contribuant. La composition du gaz dans les cylindres est estimée en utilisant une structure standard d'estimateur discret :

$$\Lambda_k = \begin{bmatrix} \lambda_{cyl1} \\ \lambda_{cyl2} \\ \lambda_{cyl3} \\ \lambda_{cyl4} \end{bmatrix} \qquad (11)$$

$$\Lambda_{k+1} = \Lambda_k + K_{alloc} \times C^t \times (\lambda_{man\_in\_k} - C \times \Lambda_k) \qquad (12)$$

$K_{alloc}$ est le gain de l'estimateur.

L'estimateur, selon l'invention, qui permet la reconstruction de la richesse dans chacun des cylindres à partir d'une seule mesure en aval de la turbine a la structure schématisée par la figure 6.

Le bloc RTM représente le modèle physique, le bloc KF représente le filtre de Kalman, le bloc CA représente le module d'allocation par cylindre.

Résultats en simulation :

On teste l'estimateur comprenant le modèle physique temps réel, le filtre de Kalman et le module d'allocation. Les mesures de richesse utilisées en entrée de l'estimateur sont données par la modélisation de référence AMESim. La dynamique de la sonde n'a pas été pris en compte.

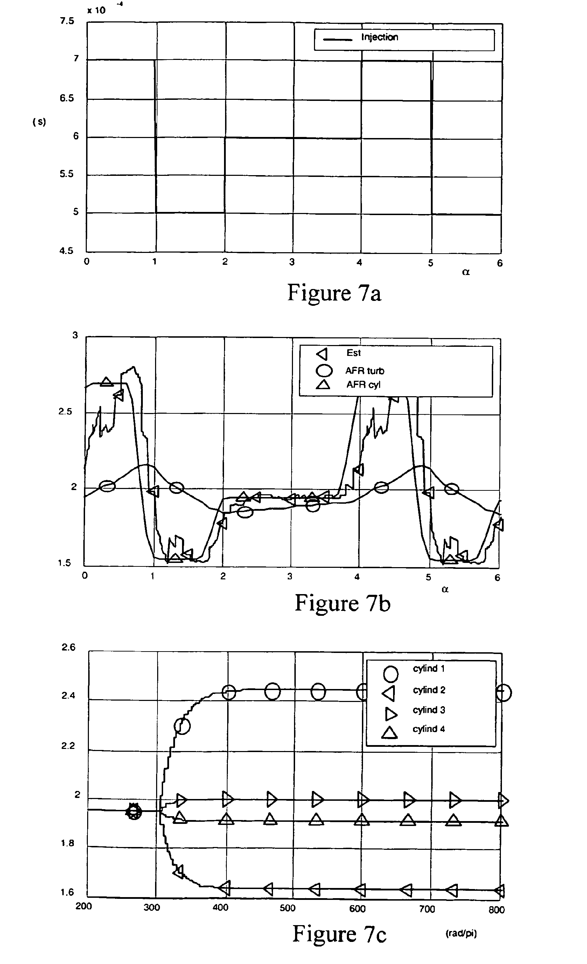

La figure 7a montre les temps d'injection en fonction du calage du vilebrequin appliqués aux cylindres 1 et 2. La figure 7b donne sur le même graphe : la richesse en aval de la turbine (AFR$_{turb}$), et la comparaison entre la richesse cylindre théorique (AFR$_{cyl}$) et la richesse cylindre estimé (Est) par le modèle de la présente invention. On note une légère différence de phase, probablement du à l'inertie du gaz qui n'est pas pris en compte dans le présent modèle. Cependant, la performance du filtre de Kalman pour l'inversion est bonne.

Pour les mêmes signaux, la figure 7c montre l'efficacité de l'estimation et du module d'allocation des cylindres, bien que les valeurs de richesse pour les cylindres 3 et 4 soient légèrement modifiées.

Estimateur du temps de retard à l'échappement :

L'estimateur implémenté comme décrit plus haut, ne prend pas en compte le temps de retard entre l'échappement cylindre et le signal acquis par la sonde. Dans la réalité, le temps de retard provient de plusieurs sources : temps de transport dans les tubulures et à travers les volumes, temps mort de la sonde de mesure.

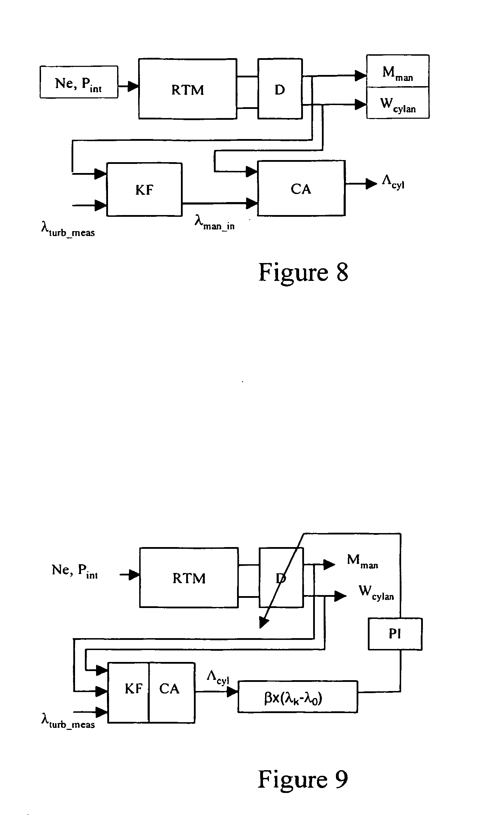

En appliquant un temps de retard D à l'entrée de l'estimateur sur les variables provenant du modèle, on peut le synchroniser avec les mesures de richesse. La figure 8 montre la structure de l'estimateur avec retard.

Le temps de retard dépend des conditions de fonctionnement : vitesse moteur, charge, pression au collecteur d'échappement, etc. Comme le retard est difficile à modéliser, on a développé une méthode d'identification de manière à calculer en temps réel le retard entre l'estimateur et les mesures sans appel à une instrumentation supplémentaire. Le principe consiste à appliquer un petit échelon dans le voisinage du point d'injection du cylindre 1, et à calculer les variations estimées de richesse pour chacun des cylindres. Puis, un critère d'identification $J_k$ est construit de manière à pénaliser les variations des cylindres 2, 3, et 4.

$$\begin{cases} \beta = [0, 1, -1, 2] \\ J_k = \beta \times (\Lambda_k - \Lambda_0) \end{cases} \quad (13)$$

La pénalisation est donnée par $\beta$. S'il y a une variation positive de la valeur de richesse estimée pour le cylindre 2, alors le temps de retard entre l'estimateur et les mesures est positif. S'il y a une variation sur le cylindre 3, le retard est négatif et la pénalisation est négative. Une variation du cylindre 4 peut être considérée comme une conséquence d'un retard positif ou négatif.

Le critère $J_k$ est contrôlé à zéro par un contrôleur PI sur le retard de l'estimateur. Quand le contrôleur est stabilisé, la variation de la richesse estimée est maximale sur le cylindre 1, et minimale sur le cylindre 4. L'estimateur est alors en phase avec les mesures. Le principe de l'identification est décrit sur le diagramme de la figure 9.

Résultats :

Les figures suivantes montrent les résultats de l'estimateur à un décalage de 10% du temps d'injection au cylindre 1, à charge moyenne et au régime de 2600 tour/min.

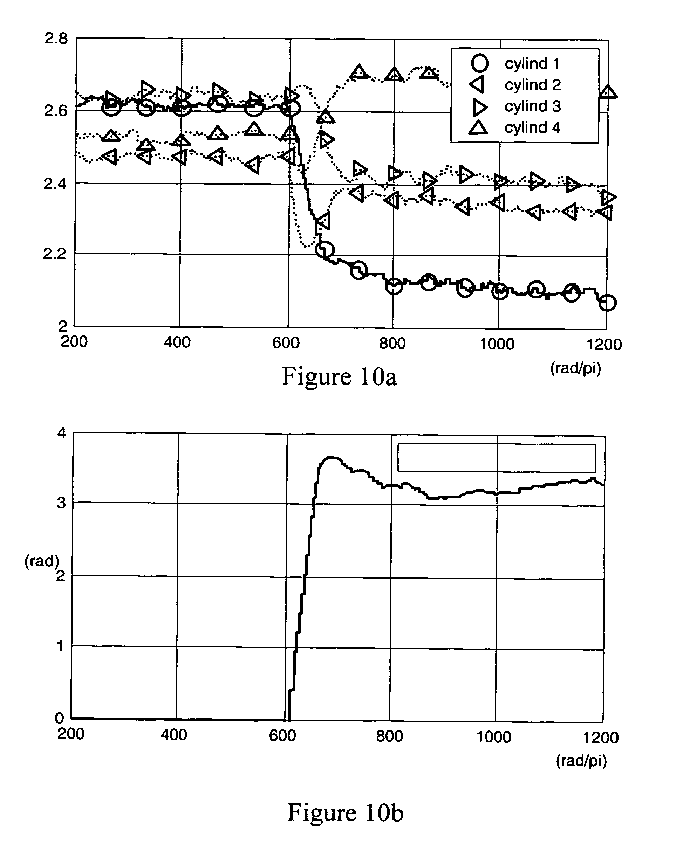

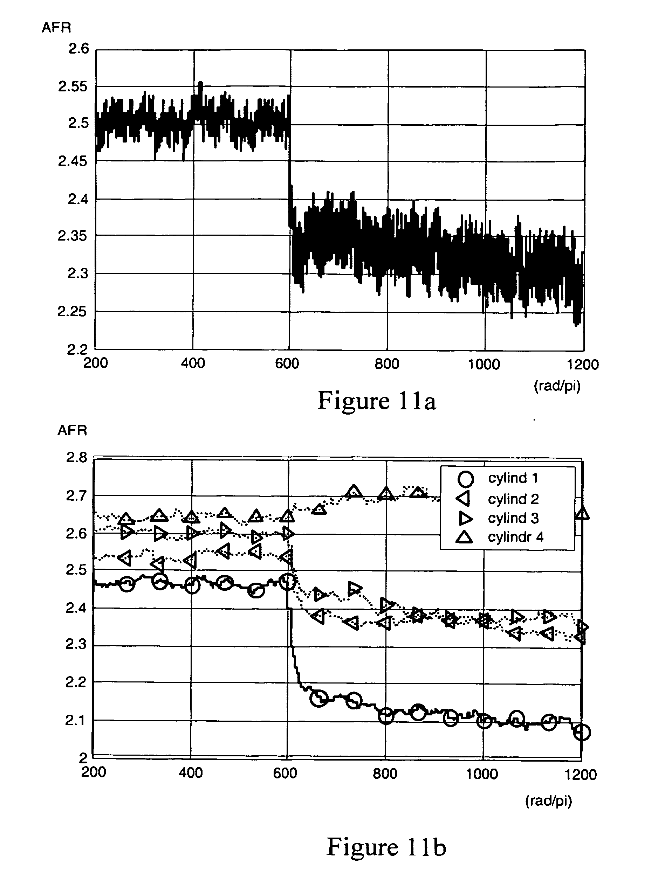

Les figures 10a et 10b montrent l'identification du temps de retard entre l'estimateur et les mesures. Quand le temps d'injection de l'injecteur du cylindre 1 est décalé (calage à environ 600 rad/$\pi$ - figure 11b) la variation de la richesse estimée du cylindre 1 est plus faible que pour les autres cylindres. Cela est corrigé par le régulateur qui est stabilisé après 60 cycles.

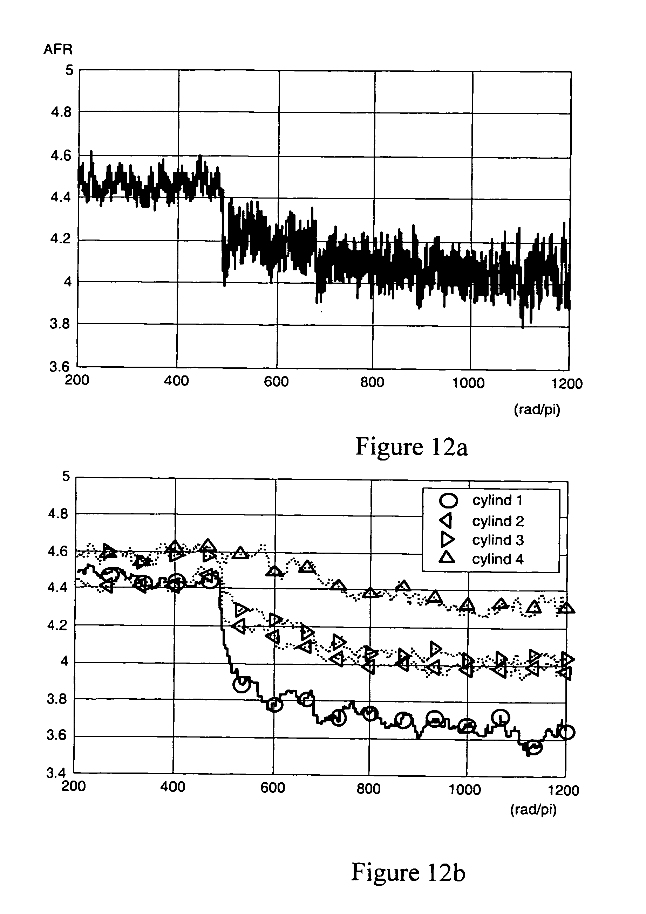

Les figures 11a, 11b et 12a, 12b illustrent la mesure de la richesse en aval de la turbine et les richesses estimées, respectivement pour un point de fonctionnement à 2600 tour/min à charge moyenne et pour un point de fonctionnement à 1500 tour/min à faible charge.

La présente invention concerne la construction d'un observateur d'état, permettant à partir de la mesure de richesse de la sonde, et de l'information de masse totale de gaz à l'intérieur du collecteur donnée par le modèle physique, d'estimer les débits d'air et totaux en sortie des quatre cylindres, donc la richesse équivalente aux quatre débits. Le Filtre de Kalman Etendu ainsi réalisé est performant, et surtout ne nécessite aucun réglage supplémentaire dans le cas de changement du point de fonctionnement. Aucune phase d'identification n'est nécessaire, seul un réglage des bruits de mesure et de modèle doit être effectué, une seule et unique fois.

Ensuite, le traitement de la richesse obtenue par un autre filtre de Kalman permet de séparer les débits et d'identifier les richesses de chaque cylindre. Les résultats obtenus sont relativement bons à faible régime comme pour des régimes plus élevés, une fois le temps de retard réglé.

Pour rendre plus robuste l'estimateur selon l'invention, quelles que soient les conditions de fonctionnement, un contrôleur de temps de retard est mis en parallèle de l'estimateur, permettant de recaler le temps de retard à la suite d'un échelon de temps d'injection sur un cylindre. Ceci permet un calage optimal de l'estimateur, par exemple avant une phase de richesse 1.

**Revendications**

1. Méthode pour estimer la richesse en carburant dans chacun des cylindres d'un moteur à combustion interne multi-cylindres comprenant un circuit d'échappement comprenant au moins des tubulures reliant l'échappement des cylindres à un collecteur et un capteur de mesure de la richesse en aval dudit collecteur, **caractérisée en ce qu'**elle comporte les étapes suivantes:

   - on établit un modèle physique (RTM) représentant en temps réel l'éjection des gaz des cylindres et leur parcours dans ledit circuit d'échappement jusqu'au capteur,
   - on couple ledit modèle avec un observateur d'état non linéaire du type Filtre de Kalman Etendu dans lequel on prend en compte la mesure de richesse fournie par le capteur,
   - on déduit la valeur de richesse à l'entrée du circuit d'échappement,
   - on traite cette valeur de richesse par un autre filtre de Kalman pour identifier la richesse de chacun des cylindres.

2. Méthode selon la revendication 1, dans laquelle on affecte à un cylindre déterminé, ladite valeur de richesse à l'entrée du circuit d'échappement.

3. Méthode selon la revendication 2, dans laquelle on évalue un temps de retard dû au temps de transit des gaz et au temps de réponse du capteur, en effectuant une perturbation test dans un cylindre déterminé et en mesurant son effet au capteur.

4. Méthode selon la revendication 1, dans laquelle on valide ledit modèle physique (RTM) à l'aide d'une modélisation de référence non inversible.

5. Application de la méthode selon l'une des revendications précédentes, à un contrôle moteur pour adapter les masses de carburant injectées dans chacun des cylindres afin de régler les richesses dans tous les cylindres.

**Claims**

1. A method of estimating the fuel/air ratio in each cylinder of a multicylinder internal-combustion engine comprising an exhaust circuit including at least pipes connecting the exhaust of the cylinders to a manifold and a fuel/air ratio detector downstream from said manifold, **characterized in that** it comprises the following stages :

   - establishing a physical model (RTM) representing in real time the expulsion of the gases from the cylinders and their travel in said exhaust circuit to the detector,
   - coupling said model with a non-linear state observer of Extended Kalman Filter type wherein the fuel/air ratio measurement provided by the detector is taken into account,
   - deducing the fuel/air ratio value at the exhaust circuit inlet,
   - processing this fuel/air ratio value by means of another Kalman filter so as to identify the fuel/air ratio of each cylinder.

2. A method as claimed in claim 1, wherein said fuel/air ratio value at the exhaust circuit inlet is assigned to a determined cylinder.

3. A method as claimed in claim 2, wherein a lag time due to the gas transit time and to the detector response time is evaluated by carrying out a test disturbance in a determined cylinder and by measuring its effect at the detector.

4. A method as claimed in claim 1, wherein said physical model (RTM) is validated by means of non-invertible reference modelling.

5. Application of the method as claimed in any one of the previous claims to an engine control for adapting the fuel masses injected into each cylinder so as to adjust the fuel/air ratios in all the cylinders.

**Patentansprüche**

1. Verfahren zum Schätzen des Luft-Kraftstoff-Verhältnisses in jedem der Zylinder einer Mehrzylinder-Brennkraftmaschine mit einer Abgasleitung, die mindestens Auslassstutzen, die den Auslass der Zylinder mit einem Auspuffkrümmer verbinden, und einen Sensor zum Messen des Luft-Kraftstoff-Verhältnisses hinter diesem Auspuffkrümmer umfasst, **dadurch gekennzeichnet, dass** es die folgenden Schritte umfasst:

   - das Erstellen eines physikalischen Modells (RTM), das den Ausstoß der Gase aus den Zylindern und ihren Verlauf in der Abgasleitung bis zum Sensor in Echtzeit darstellt,
   - das Koppeln dieses Modells mit einem nichtlinearen Zustandsbeobachter des Typs Erweiterter Kalmanfilter, in welchem die vom Sensor erhaltene Messung des Luft-Kraftstoff-Verhältnisses berücksichtigt wird,
   - das Ableiten des Werts des Luft-Kraftstoff-Verhältnisses am Eingang der Abgasleitung,
   - das Verarbeiten dieses Werts des Luft-Kraftstoff-Verhältnisses durch ein anderes Kalmanfilter, um das Luft-Kraftstoff-Verhältnis jedes Zylinders festzustellen.

2. Verfahren nach Anspruch 1, wobei der Wert des Luft-Kraftstoff-Verhältnisses am Eingang der Abgasleitung einem bestimmten Zylinder zugewiesen wird.

3. Verfahren nach Anspruch 2, wobei eine Verzögerungszeit, die auf die Durchlaufzeit der Gase und auf die Ansprechzeit des Sensors zurückzuführen ist, bewertet wird, indem in einem bestimmten Zylinder eine Testverwirbelung durchgeführt wird und deren Wirkung auf den Sensor gemessen wird.

4. Verfahren nach Anspruch 1, wobei das physikalische Modell (RTM) mithilfe einer nicht invertierbaren Referenzmodellierung validiert wird.

5. Anwendung des Verfahrens nach einem der vorherigen Ansprüche auf eine Motorsteuerung zur Anpassung der in jeden Zylinder eingespritzten Kraftstoffmengen, um die Luft-Kraftstoff-Verhältnisse in allen Zylindern zu regeln.

Figure 1

Figure 2

Figure 3

Figure 4

Figure 5

Figure 6

x 10⁻⁴

Figure 7a

Figure 7b

Figure 7c    (rad/pi)

Ne, $P_{int}$ → RTM — D → $M_{man}$ / $W_{cylan}$

KF → CA → $\Lambda_{cyl}$

$\lambda_{turb\_meas}$ $\lambda_{man\_in}$

## Figure 8

Ne, $P_{int}$ → RTM — D → $M_{man}$ / $W_{cylan}$

PI

KF | CA → $\Lambda_{cyl}$ → $\beta x(\lambda_k - \lambda_0)$

$\lambda_{turb\_meas}$

## Figure 9

Figure 10a

Figure 10b

AFR

Figure 11a

(rad/pi)

AFR

| O | cylind 1 |
| ◁ | cylind 2 |
| ▷ | cylind 3 |
| △ | cylindr 4 |

(rad/pi)

Figure 11b

Figure 12a

Figure 12b

## RÉFÉRENCES CITÉES DANS LA DESCRIPTION

**Documents brevets cités dans la description**

- FR 2834314

**Littérature non-brevet citée dans la description**

- **Mohinder S. Grewal.** Kalman Filtering Theory and Practice. Prentice Hall, 1993

- **Greg Welch ; Gary Bishop.** *An Introduction to the Kalman Filter,* 23 Mai 2003